# EUROPEAN PATENT SPECIFICATION

(11) **EP 0 486 476 B1**
(45) Date of publication and mention of the grant of the patent: **03.05.1995**
(21) Application number: 92103303.1
(22) Date of filing: 23.12.1987
(51) Int. Cl.: C09D 5/08, C23C 22/00

(54) **Processes and products for surface treatment**
Verfahren und Produkte zur Oberflächenbehandlung
Procédés et produits pour le traitement de surfaces

(30) Priority: 23.12.1986 GB 8630740; 17.02.1987 GB 8703583; 21.07.1987 GB 8717231
(43) Date of publication of application: 20.05.1992
(62) Divisional of application: 87311341.9
(73) Proprietor: ALBRIGHT & WILSON LIMITED, Oldbury, Warley, West Midlands B68 0NN (GB)
(72) Inventor: Collier, John Richard, Chase Heights, Hedensford, Stafforshire (GB); Holker, Kenneth Urmston, Kidderminster, Worcestershire (GB)
(74) Representative: Kinton, Colin David

(56) References cited:
- EP-A- 0 177 086
- FR-A- 2 384 034
- GB-A- 745 890
- GB-A- 2 071 070
- US-A- 3 139 406
- US-A- 3 562 011
- US-A- 3 650 783
- US-A- 4 758 281

## Description

This invention relates to surface treatment and more particularly to processes for preparing anticorrosive materials for application to surfaces.

The treatment of surfaces, especially metal surfaces, prior to the application of organic coatings such as paints, lacquers, adhesives, plastics and the like, is known to be of value not only in increasing the properties of the treated surfaces, in terms of its corrosion resistance, but also as improving the adhesion of the organic coatings enabling them to be more effective.

Our prior application EP-A-0273698 describes and claims a process of preparing a surface for the subsequent application of an organic finishing coating in which an aqueous acidic dispersion is applied to the surface and heated so as to deposit thereon an essentially inorganic priming coat of anticorrosion or adhesion-promoting material, the dispersion comprising an acidic trivalent metal compound in which the metal is iron or aluminium or a mixture thereof and silica of fine particle size, with a silicon to trivalent metal atom ratio of 0.2-30:1 and substantially free of metals capable of valency of at least 5. This process is designed to be followed by the application of a protective organic coating.

According to the present invention, a protective anticorrosive material resulting from the reaction of certain trivalent metal compounds and silica or silicate is prepared as a preformed material for incorporation into a paint for subsequent protective application to the metal or other surface.

The present invention comprises an anticorrosive material which is a reaction product obtained by reaction of a trivalent metal compound, in which the metal is iron, aluminium, or chromium or a mixture thereof, and silica of fine particle size or a precursor thereof or a silicate, the silicon to trivalent metal atom ratio being 0.2-30:1, said product being substantially free of water-soluble by-products of said reaction.

The present invention also comprises a process for producing an anticorrosive material by reaction of a trivalent metal compound, in which the metal is iron, aluminium, or chromium or a mixture thereof, and silica of fine particle size or a precursor thereof or a silicate, the silicon to trivalent metal atom ratio being 0.2-30:1, recovering the reaction product and washing it with water to remove water-soluble by-products of the reaction. In preparing the anti corrosive material preferred ratios of silicon to trivalent metal are 1-15:1 e.g. 1-10:1 such as 1-5:1 and especially 1.5-3.5:1, though ratios of 10-30:1 can also give benefits.

For use according to the invention the preferred trivalent metals are aluminium and iron (ferric). Significant amounts of divalent metals e.g. manganese and/or alkaline earth metals such as magnesium, are also preferably absent in the material prepared in accordance with this invention.

The trivalent metal ion is associated with an anion such that the metal salt is water soluble e.g. sufficiently water soluble for the proposed reaction. Examples of suitable anions are sulphate, mono and diacid phosphate, acid fluoride and acid silicofluoride. The trivalent metal compound is preferably mixed with the silica (or precursor thereof) or silicate under acid conditions.

Amorphous silica, which has been obtained pyrogenically from silicon tetrachloride, or which has been precipitated in an aqueous medium from alkali silicates, may be used. Thus the silica is usually hydrophilic non-crystalline and colloidal. It usually has Si-OH groups on the surface and preferably only such groups, though some of these may be replaced by Si-O-Na or Si-O-Al groups. The average surface area of the silica is usually 10-1000 m²/g such as 30-1000 m²/g, e.g. 100-500 and especially 150-350 m²/g. The silica particles usually have an average particle size less than 170nm or but may be of 1-200nm e.g. 1-50nm such as 4-30mm or especially 8-20nm. Thus silica gel and precipitated silica may be used.

It may be possible or even preferable to employ a precursor of amorphous silica i.e. a hydrated form of silica in the processes and the compositions of this invention. The most preferred sources of silica for the use in this invention are the products which are sold under the Trade Mark AEROSIL in particular those which are fumed silicas with average particle size of 5-20nm and surface areas of 150-350 m²/g especially 150-250 m²/g.

The ratio of silicon to trivalent metal is within the range 0.2-30:1, including 1.5-30:1, 2.5-30:1, and 3.5-30:1. Preferred ranges are 1.5-20:1 such as 1.5-10:1.

In preparing the material, the solution of trivalent metal compound e.g. an acid phosphate or sulphate is usually added to the silicon component with adjustment of pH if needed. The trivalent metal compound and silica may be intimately admixed and heated to a temperature of at least 100°C e.g. at least 150°C in order to form a solid material which is useful as a pigment in anticorrosive paints. The pigment may be made by drying an aqueous dispersion of the silica in a solution of water soluble salt of the trivalent metal, the dispersion being preferably at acid pH e.g 1.5-6.5, drying being carried out at elevated temperatures. Preferably however the dispersion dried is the product of mixing an aqueous solution of the trivalent metal salt with an alkali metal silicate in the desired molar proportions of trivalent metal to silicon e.g. 1:1-15 and especially 1:1.5-3 and then filtering the solid obtained, washing it thoroughly with water, thereby removing anions derived from the trivalent metal compound and refiltering and then drying it at a temperature of at least 100°C or at least 150°C. Instead of filtering the solid from the product suspension before washing, the whole suspension may be dried before the washing step.

The present invention also comprises a coating composition for the protection of surfaces comprising a paint vehicle and a preformed anticorrosive material obtained as described above. The paint compositions of this invention may be formulated using any conventional paint vehicle which may be water or organic based and is preferably heat curable.

Examples of useful vehicles include alkyd resins, epoxy resins and drying oils. Preferably the paints will comprise from 15 to 50 parts by weight of the total pigment with from 1-20% by weight (of the composition) of the anti corrosive pigment of the invention.

Materials prepared by the admixture or reaction of a trivalent metal compound and silica at lower temperatures may be useful as anti-corrosive pigments in paint compositions according to this invention where the paint is a stoving paint i.e. it is cured by exposure to a temperature of at least 100°C, e.g. at least 150°C. An example of a material which is useful in this respect is the material obtained by precipitating an insoluble salt of a trivalent metal from a dispersion of silica containing the metal in solution thus coating the silica particles with a layer of the precipitated salt.

Paints containing the anticorrosive material may conveniently be applied to any non-porous material such as metal, glass or plastic. The coating of surfaces formed from common metals forms a preferred aspect of the present invention. The invention is particular by useful with surfaces formed from iron, aluminium, tin or zinc, or alloys comprising one or more of these metals alloyed with themselves or with other metals such as copper, nickel and/or magnesium. Examples of alloys or alloy surfaces which can be coated include stainless steel and aluminium alloys of international designations 3103 and 5052. Examples of other particular metals include mild steel and galvanised mild steel. The metal may be in the form of a thin surface layer formed on a substrate.

The substrate may be metallic e.g. tin plate or non-metallic e.g. plastics material. The substrate may take the form of individual articles, tubes, rods, wires, plates, panels or strips.

The invention is illustrated by the following examples:

### Example 1

Aluminium dihydrogen phosphate in the form of a 48% w/w S.G. 1.48 solution of aluminium acid phosphate of AI:P atom ratio of 0.34:1 thoroughly mixed with an aqueous 25% dispersion of Aerosil OX50 fumed silica of 40 nm particle size and 50m²/g surface area (320ml) and aluminium oxide (28g) and the product slurry dried at 156°C for 5 hr. The solid was ground to a powder, washed thoroughly with water, redried and reground.

This solid was compared as an anti corrosive pigment to zinc phosphate, aluminium tripolyphosphate and a calcium silica ion exchange pigment. In each case 20g of each pigment was mixed with 300 ml of acrylic stoving enamel in a ball mill and the paint obtained applied by a 24 micron bar coater to a cleaned mild steel panel. The coated panel was stoved at 165°C for 20 min, diagonally scribed and then subjected to a neutral salt spray. The pigment from aluminium phosphate and silica was better than the others in terms of reduction in paint loss and rust spread from the scribe lines.

### Example 2

For Ex 2A aluminium hydrogen phosphate solution used in Ex 1 (40ml) was added with stirring to an aqueous solution of sodium silicate (24g) in deionized water (200ml). The slurry mixture obtained was heated at 180-200°C for 2 hrs to give a dry solid which was ground to a powder, washed well with water until the filtrate had a pH greater than 5, and finally dried for a further 2 hrs at 180-200°C.

The process was repeated with 162g of sodium silicate and an extra 47ml of phosphoric acid (SG 1.75) (Example 2B), or 80ml of the aluminium phosphate solution and 24g sodium silicate in the water (Ex 2C) or 80ml of the aluminium phosphate solution and 12g of sodium silicate with water (Ex 2D). The process was repeated with aluminium sulphate 16 hydrate (28g) and sodium silicate (24g) in 200 ml of deionized water (Ex2E). Finally the process of Ex 2A was repeated with 63g of 48% w/w chromic tris (dihydrogen phosphate) solution.

In each case the dried solid was ball milled at 7% w/w into Macpherson Seashell acrylic stoving enamel (3761/125) and the paint obtained applied to a cleaned mild steel panel with a bar coater to a thickness of 35-40 micron. After stoving at 160°C for 20 mins. the panels were scribed diagonally and subjected to a 500 hr salt spray test. The results were compared to that obtained with zinc phosphate with scoring from 0 (best) to 10 (worst).

| **Ex** | **2A** | **2B** | **2C** | **2D** | **2E** | **2F** | **Zn phosphate** |
|---|---|---|---|---|---|---|---|
| Metal Ion | A1 | A1 | A1 | A1 | A1 | Cr | - |
| Si:M | 2.24 :1 | 14.9 :1 | 4.6 :1 | 2.24 :1 | 1.13 :1 | 2.24 :1 | - |
| Score | 5 | 4 | 5 | 5 | 5 | 5 | 7 |

## Claims

1. An anticorrosive material which is a reaction product obtained by reaction of a trivalent metal compound, in which the metal is iron, aluminium, or chromium or a mixture thereof, and silica of fine particle size or a precursor thereof or a silicate, the silicon to trivalent metal atom ratio being 0.2-30:1, said product being substantially free of water-soluble by-products of said reaction

2. A material according to claim 1, wherein the silicon/metal atom ratio is 1-5:1.

3. A material according to claim 2, wherein the silicon/metal atom ratio is 1.5-3.5:1.

4. A material according to claim 1,2 or 3, formed from aluminium hydrogen phosphate and sodium silicate.

5. A material according to claim 1, 2 or 3, formed from aluminium sulphate and sodium silicate.

6. A material according to any of claims 1 to 5, which is obtained by heating to at least 100°C.

7. An anti-corrosive material comprising a material obtained by reacting a trivalent aluminium or iron compound or a mixture thereof with a soluble silicate in aqueous solution, separating the reaction product from water-soluble by-products of the reaction, and heating the product to form a dried material, the atomic ratio of silicon to aluminium or iron being 0.2 - 30:1.

8. A coating composition containing an anticorrosive material of any of claims 1 to 7 and a paint vehicle.

9. A coating composition according to claim 8 in which the anticorrosive material constitutes from 1 to 20% by weight.

10. A surface which has been coated with a heat-curing coating composition according to claim 8 or 9, and then subsequently heat cured.

11. A process for producing an anticorrosive material by reaction of a trivalent metal compound, in which the metal is iron, aluminium, or chromium or a mixture thereof, and silica of fine particle size or a precursor thereof or a silicate, the silicon to trivalent metal atom ratio being 0.2-30:1, recovering the reaction product and washing it with water to remove water-soluble by-products of the reaction.

12. A process according to Claim 11, in which the silicon/trivalent metal atom ratio is as specified in Claim 2 or 3.

13. A process according to Claim 11 or 12, in which aluminium hydrogen phosphate or aluminium sulphate is reacted with sodium silicate.

14. A process for protecting a metal surface against corrosion which comprises applying to the surface an adherent coating containing anticorrosive material according to any of claims 1 to 7 or a coating composition according to claim 8 or 9.

15. A protected metal surface produced by a process according to claim 14.

## Patentansprüche

1. Korrosionsschutzmaterial, bestehend aus einem Reaktionsprodukt, das durch Reaktion einer Verbindung eines dreiwertigen Metalls, in welcher das Metall Eisen, Aluminium oder Chrom oder eine Mischung derselben ist, mit Siliziumdioxid feiner Teilchengröße oder einer Vorstufe desselben oder einem Silikat erhalten wurde, wobei das Atomverhältnis von Silizium zu dreiwertigem Metall 0,2-30:1 beträgt und das genannte Produkt im wesentlichen frei von wasserlöslichen Nebenprodukten dieser Reaktion ist.

2. Material nach Anspruch 1, in welchem das Atomverhältnis von Silizium zu Metall 1-5:1 beträgt.

3. Material nach Anspruch 2, in welchem das Atomverhältnis von Silizium zu Metall 1,3-3,5:1 beträgt.

4. Material nach Anspruch 1, 2 oder 3, das aus Aluminiumhydrogenphosphat und Natriumsilikat hergestellt ist.

5. Material nach Anspruch 1, 2 oder 3, das aus Aluminiumsulfat und Natriumsilikat hergestellt ist.

6. Material nach einem der Ansprüche 1 bis 5, das durch Erhitzen auf mindestens 100°C erhalten wurde.

7. Korrosionsschutzmaterial, umfassend ein Material, das durch Umsetzung einer Verbindung von dreiwertigem Aluminium oder Eisen oder einer Mischung derselben mit einem löslichen Silikat in wässeriger Lösung, Trennung des Reaktionsprodukts von wasserlöslichen Nebenprodukten der Reaktion und Erhitzen des Produkts zur Bildung eines getrockneten Materials erhalten wurde, wobei das Atomverhältnis von Silizium zu Aluminium oder Eisen 0,2 - 30:1 beträgt.

8. Überzugszusammensetzung, die ein Korrosionsschutzmaterial nach einem der Ansprüche 1 bis 7 und einen Anstrichträger enthält.

9. Überzugszusammensetzung nach Anspruch 8, in welcher das Korrosionsschutzmaterial 1 bis 20 Gew.-% ausmacht.

10. Oberfläche, die mit einer Hitze-härtenden Überzugszusammensetzung nach Anspruch 8 oder 9 beschichtet und anschließend Hitze-gehärtet wurde.

11. Verfahren zur Herstellung eines Korrosionsschutzmaterials durch Reaktion einer Verbindung eines dreiwertigen Metalls, in welcher das Metall Eisen, Aluminium oder Chrom oder eine Mischung derselben ist, mit Siliziumdioxid feiner Teilchengröße oder einer Vorstufe desselben oder einem Silikat, wobei das Atomverhältnis von Silizium zu dreiwertigem Metall 0,2-30:1 beträgt, Gewinnung des Reaktionsprodukts und Waschung desselben mit Wasser zur Abtrennung wasserlöslicher Nebenprodukte der Reaktion.

12. Verfahren nach Anspruch 11, bei welchem das Atomverhältnis von Silizium zu dreiwertigem Metall den Angaben von Anspruch 2 oder 3 entspricht.

13. Verfahren nach Anspruch 11 oder 12, bei welchem Aluminiumhydrogenphosphat oder Aluminiumsulfat mit Natriumsilikat umgesetzt wird.

14. Verfahren zum Schützen einer Metalloberfläche gegen Korrosion, bei welchem auf die Oberfläche ein haftender Überzug, der Korrosionsschutzmaterial nach einem der Ansprüche 1 bis 7 enthält, oder eine Überzugszusammensetzung nach Anspruch 8 oder 9 aufgebracht wird.

15. Geschützte Metalloberfläche, hergestellt durch ein Verfahren nach Anspruch 14.

## Revendications

1. Matériau anticorrosif qui est un produit de réaction obtenu en faisant réagir un composé de métal trivalent dans lequel le métal est le fer, l'aluminium ou le chrome ou un mélange de ceux-ci et de la silice sous forme de fines particules ou un précurseur de celle-ci ou un silicate, le rapport atomique silicium/métal trivalent étant 0,2-30:1, ledit produit étant essentiellement exempt de sous-produits de ladite réaction solubles dans l'eau.

2. Matériau selon la revendication 1, dans lequel le rapport atomique silicium/métal est égal à 1-5:1.

3. Matériau selon la revendication 2, dans lequel le rapport atomique silicium/métal est égal à 1,5-3,5:1.

4. Matériau selon la revendication 1, 2 ou 3, constitué d'hydrogénophosphate d'aluminium et de silicate de sodium.

5. Matériau selon la revendication 1, 2 ou 3, constitué de sulfate d'aluminium et de silicate de sodium.

6. Matériau selon l'une quelconque des revendications 1 à 5, qui est obtenu par chauffage à au moins 100°C.

7. Matériau anticorrosif comprenant un matériau obtenu en faisant réagir un composé d'aluminium ou de fer trivalent ou un mélange de ceux-ci avec un silicate soluble en solution aqueuse, en séparant le produit de la réaction des sous-produits de la réaction soluble dans l'eau, et en chauffant le produit pour former un matériau séché, le rapport atomique du silicium à l'aluminium ou au fer étant 0,2-30:1.

8. Composition de revêtement contenant un matériau anticorrosif selon l'une quelconque des revendications 1 à 7 et un véhicule de peinture.

9. Composition de revêtement selon la revendication 8, dans laquelle le matériau anticorrosif constitue de 1 à 20% en poids.

10. Surface qui a été enduite avec une composition de revêtement durcie à chaud selon la revendication 8 ou 9, et durcie ultérieurement par la chaleur.

11. Procédé de production de matériau anticorrosif en faisant réagir un composé de métal trivalent dans lequel le métal est le fer, l'aluminium ou le chrome ou un mélange de ceux-ci et de la silice sous forme de fines particules, ou un précurseur de celle-ci ou un silicate, le rapport atomique silicium/métal trivalent étant égal à 0,2-30:1, en récupérant le produit de réaction et en le lavant à l'eau pour éliminer les sous-produits de la réaction solubles dans l'eau.

12. Procédé selon la revendication 11, dans lequel le rapport atomique silicium/métal trivalent est tel que déterminé par la revendication 2 ou 3.

13. Procédé selon la revendication 11 ou 12, dans lequel l'hydrogénophosphate d'aluminium ou le sulfate d'aluminium est mis à reagir avec du silicate de sodium.

14. Procédé de protection d'une surface métallique contre la corrosion, qui consiste à appliquer à la surface un revêtement adhérent contenant un matériau anticorrosif, selon l'une quelconque des revendications 1 à 7, ou une composition de revêtement selon la revendication 8 ou 9.

15. Surface de métal protégée obtenue par un procédé selon la revendication 14.
